# EUROPEAN PATENT APPLICATION

(11) **EP 1 667 456 A1**
(43) Date of publication of application: **07.06.2006**
(21) Application number: 05111323.1
(22) Date of filing: 25.11.2005
(51) Int. Cl.: H04N 7/173

(54) **Personal media channel**

(30) Priority: 02.12.2004 US 1869
(71) Applicant: MICROSOFT CORPORATION, Redmond, Washington 98052-6399 (US)
(72) Inventor: Pai, Akash L., Redmond, WA 98052 (US); Thukral, Vivek, Redmond, WA 98052 (US)
(74) Representative: Grünecker, Kinkeldey, Stockmair & Schwanhäusser Anwaltssozietät

(57) **Abstract**

Exemplary systems, engines, and methods allow a multimedia service subscriber to upload personal media content to a multimedia service. The personal media content is then distributed to selected recipients over a personal media channel that is offered only to the selected recipients.

## Description

### TECHNICAL FIELD

The subject matter relates generally to multimedia systems and more specifically to a personal media channel.

### BACKGROUND

Sharing personal photos and homemade movies has become much easier because photos and movies can be transferred in a digital format. Attaching picture files to an email message has become universally available. Internet features also enable a user to share photos using Internet web sites. This technique is usually limited to photos and requires interested parties to log onto a web site to view the photos.

Home entertainment systems provide commercial media content, such as television programs, from a multimedia service. Such systems can provide the commercial media content in high definition video and high fidelity audio. Recording of this commercial media content for a subscriber's personal use is permitted. The media content provided commercially for home entertainment systems, however, is selected and produced by the multimedia service that operates the cable, satellite, or "over-the-air" headend.

A personal television channel system is presented in U.S. Patent No. 6,774,926 to Ellis et al (the "Ellis reference"). The Ellis system allows an individual contributor to upload personal video content to a television service operator. Although the uploaded content may be personal, the television channels for distribution of the personal content are merely public channels that have been set aside for broadcasting the personal content. The operator may, e.g., make a certain number of broadcast times available to contributors on a first-come-first-served basis. Once the contributor has been assigned a time slot, the contributor (or the operator of an intermediate facility) may provide appropriate schedule information to a data storage facility. In other words, the system described in the Ellis reference provides a way for personal or amateur content to be broadcast on pre-established public television channels. The personal or amateur content on these publicly available "personal channels" may be publicly rated by critics, e.g., with "star" ratings. The personal content may also be searched by the public, e.g., to develop a list of favorite personal programs.

What is needed is a way for a multimedia service subscriber to designate a select group of private recipients to receive personal media content over a private television channel that is made available only to the select group of private recipients. In other words, what is needed is a truly private personal media channel-that dynamically appears integrated into the channel lineup of selected recipients-in response to the subscriber uploading personal media content. The personal media channel might then disappear when the personal media content is no longer to be shared.

### SUMMARY

Exemplary systems, engines, and methods allow a multimedia service subscriber to upload personal media content to a multimedia service. The personal media content is then distributed to selected recipients over a personal media channel that is offered only to the selected recipients.

In one implementation, the subscriber may select characteristics of the personal media channel, including media types to be distributed, a broadcast schedule, EPG data, and quality layers for digital rights management, etc. Personal media content can be spooled according to a user-designed schedule or presented as a video-on-demand storefront.

Recipients can choose whether or not to receive personal media channels. A multimedia service provider can offer subscriptions to potential recipients who do not subscribe to the multimedia service. The multimedia service provider can also bill a subscriber for storing personal media content to be distributed and can bill the subscriber for each recipient who receives the subscriber's personal media channel.

### BRIEF DESCRIPTION OF THE DRAWINGS

Fig. 1 is a diagrammatic representation of an exemplary multimedia system capable of implementing a personal media channel.

Fig. 2 is a block diagram of an exemplary personal media channel client engine.

Fig. 3 is a block diagram of an exemplary personal media channel server engine.

Fig. 4 is a flow diagram of an exemplary method of receiving and distributing personal media content.

Fig. 5 is a flow diagram of an exemplary method of creating a personal media channel.

### DETAILED DESCRIPTION

### Overview

The subject matter described herein allows a multimedia subscriber to upload personal media content to a multimedia service, for example, a cable TV provider, for distribution to selected recipients over a customized personal media channel of the multimedia service. Information about the personal media channel appears only in the electronic program guides (EPG) of intended recipients, who can choose whether or not to receive the personal media channel. In one implementation, the personal media channel has many parameters that can be customized by the subscriber uploading the personal media content. For example, a subscriber can specify the media type (e.g., personal slide show, photos, home movies, etc.), the channel number, the broadcast schedule, and even broadcast formats for the personal media channel. Example broadcast formats include spooled programming that repeatedly loops on the personal media channel according to a user-designed schedule or, a video-on-demand (VOD) storefront that offers the recipient a choice of personal media content to select from at any given time.

### Exemplary System

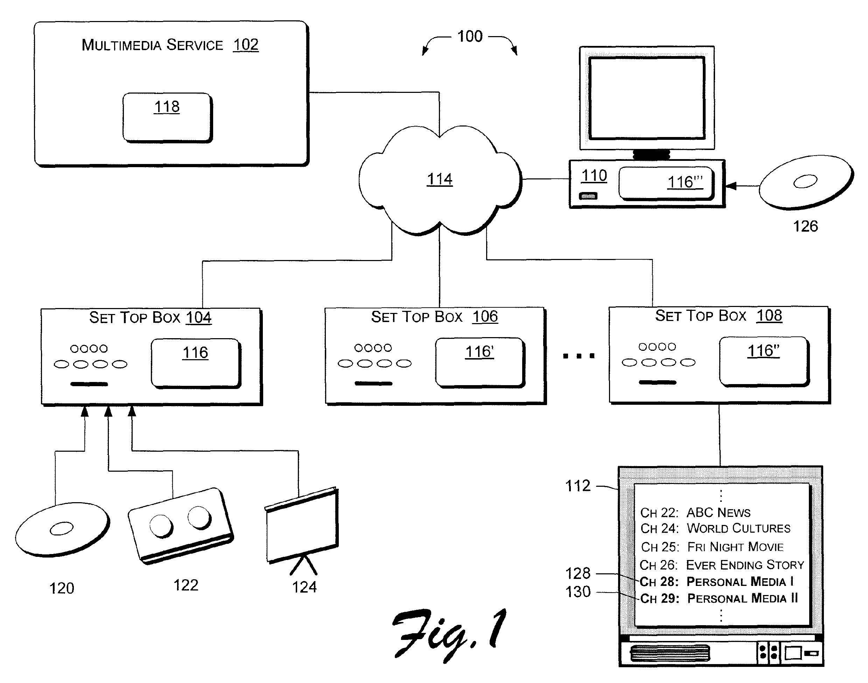

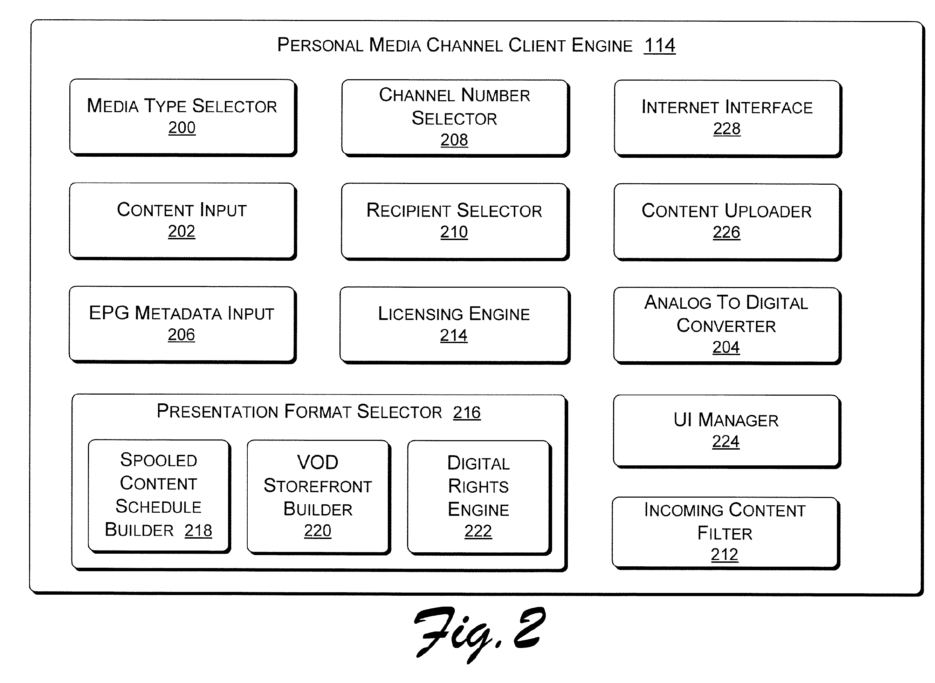

**Fig. 1** shows an exemplary multimedia system 100 that includes a multimedia service 102, such as a commercial provider of multimedia programming content (e.g., a television station, satellite headend, cable TV provider, etc.). The multimedia system 100 also includes various home entertainment systems of subscribers to the multimedia service 102. The home entertainment systems may include set top boxes (e.g., 104, 106, 108) as well as personal computing devices 110 used as clients or even as servers in a home entertainment system's local network. A display monitor 112 or television set may be connected to each set top box (e.g., 108) or computing device 110. A given subscriber may be communicatively coupled with the multimedia service 102 via the Internet 114, a cable hookup, a satellite dish, a wireless transceiver, an over-the-air receiver, etc., or combinations of these.

Subscribers to the multimedia service 102 may have set top boxes (e.g., 104) or computing devices 110 that include a personal media channel client engine (e.g., 116). An exemplary personal media channel client engine 116 (hereafter, "client engine" 116) allows a subscriber to upload personal media content to the multimedia service 102, designate custom characteristics of a personal media channel for distribution of the personal media content, and select a group of recipients eligible to receive the personal media channel with its personal media content. In one implementation, the group of proposed recipients may include non-subscribers, as will be discussed more fully below.

The multimedia service 102 may include a personal media channel server engine 118 (hereafter, "server engine" 118). An exemplary server engine 118 authorizes a subscriber to upload personal media content, then stores the content, and actualizes creation and delivery of a personal media channel, including corresponding custom EPG data. A server engine 118 manages the characteristics of a personal media channel. For example, a server engine 118 may integrate a new channel number for a personal media channel into a preexisting channel lineup, and decide which proposed recipients have digital rights to receive the newly created personal media channel.

In one implementation, a server engine 118 notifies eligible recipients that a personal media channel is available. The server engine 118 may also authenticate prospective recipients of a personal media channel and as mentioned, can even solicit subscriptions from potential recipients who are not subscribers.

In one implementation, the server engine 118 performs monetary billing associated with a personal media channel. Billing may include, for example, charges for storing personal media content and/or a charge for each recipient that receives the personal media content.

In one implementation a server engine 118 performs digital rights management (DRM). That is, either the subscriber initiating the personal media channel or a recipient may select various levels of quality-and associated cost-for viewing and/or listening to content from a personal media channel. DRM may also include communicating copyrights and licensing prospective recipients of the personal media content.

Accordingly, in one example setup, a subscriber of the multimedia service 102 may upload personal media content, such as digitally stored personal photos 120, a home movie 122, a homemade slideshow of stored images 124, etc., via a set top box 104 and the Internet 114 to a multimedia service 102. In one implementation, a subscriber may also upload personal media content, e.g., stored on a compact disk (CD) 126, via a computing device 110 instead of or in addition to a set top box 104 or other modality of the multimedia system 100. It should be noted that in some implementations, a client engine 116 may receive analog input and convert the analog content to digital format.

In one implementation, a notification is received through the set top box 108 or computing device 110 of an eligible recipient, that one or more personal media channels 128, 130 from one or more subscribers are available or potentially available if the eligible recipient so chooses.

In one implementation, the exemplary multimedia network 100 consists of a MICROSOFT® Internet protocol television (IPTV) delivery platform that includes one or more exemplary client engines 116 and/or one or more exemplary server engines 118, thus providing a scalable end-to-end system for supporting personal media channels. An IPTV platform delivers video over an IP-based network and is also capable of mediating voice and data.

An IPTV implementation of the exemplary multimedia network 100 may include capabilities and features, such as instantaneous channel transitions, electronic program guides with integrated video, and multiple picture-in-picture (PIP) windows deployed simultaneously. An IPTV implementation of the exemplary multimedia network 100 may also support high-definition television, integrated digital video recording (DVR), and video on demand (VOD) functionality.

An IPTV architecture for the exemplary multimedia system 100 is efficient as compared to some other types of multimedia networks, because the IPTV architecture uses two-way broadband networks as opposed to one-way broadcasting systems like that of conventional cable or TV Thus, in an exemplary IPTV multimedia network 100, a multimedia service 102 can unicast and multicast channels in such a manner that individual video streams are targeted to an individual set top box 104, instead of broadcasting hundreds of channels simultaneously to all subscribers.

A MICROSOFT® IPTV delivery platform may employ video compression, such as WINDOWS MEDIA® 9 Series compression for standard and high-definition formats. The WINDOWS MEDIA® 9 Series compression feature can deliver standard definition video at bit rates from approximately 1 to approximately 1.5 megabits per second (Mbps) and high-definition programming at bits rate from approximately 5 to approximately 6 Mbps. In some instances, the bandwidth used is one-half to one-third that of the bandwidth required by comparable MPEG-2 compression techniques. In some instances, if an exemplary multimedia network 100 using conventional cables and transfer techniques converts to an IPTV platform, then bandwidth that is conventionally allocated to analog services can be used instead for particular digital services, such as the personal media channels being described herein as well as the aforementioned VOD and DVR services.

In one IPTV implementation of the exemplary multimedia network 100, only channels selected by end-users are delivered over "last-mile" broadband networks. Likewise, an IPTV electronic program guide for the exemplary multimedia network 100 can enhance a unified user experience by providing integrated listings for broadcast, VOD, and the personal media channels described herein.

A MICROSOFT® IPTV implementation of the exemplary multimedia network 100 can also support a subscription or a pay-per-use schema for delivering the personal media content of a personal media channel, with content promotion and/or subscription solicitation integrated into the user experience.

An exemplary IPTV multimedia network 100 is capable of supporting secure access between a user's television and photos, music, video, slideshows, etc., stored most anywhere on a home network of the user, or delivered via a personal media channel. In a MICROSOFT® IPTV implementation of the exemplary multimedia network 100, built-in DRM technologies allow delivery of protected digital video, music, and game services to end-users, to television set-top boxes, and to other devices, including many types of portable media devices.

In one MICROSOFT® IPTV implementation of the exemplary multimedia network 100, an exemplary set top box 104 uses a processing speed of at least approximately 100 megahertz (MHz) along with 16-32 megabytes (MB) or more of memory. The exemplary set top box 104 may include a full software stack including an embedded operating system (e.g., WINDOWS® CE, WINDOWS® .NET, or WINDOWS® XP), a TV graphical user interface (GUI) layer, and middleware for delivering content and services to the interactive set top box 104 TV environment. In one implementation, an exemplary set top box 104 incorporates an INTEL PENTIUM III processor running at 933 MHZ and the Intel 830M4 graphics chipset to provide processing power for decoding advanced coders/decoders (codecs) and for producing high-quality pictures and sound. Such an exemplary set top box 104 may support multiple video codecs, including MPEG-2, MPEG-4 Part 2, WINDOWS MEDIA® 9 Series as mentioned above, and MPEG-4 Part 10 AVC (H.264/JVT).

### Personal Media Channel Client Engine 116

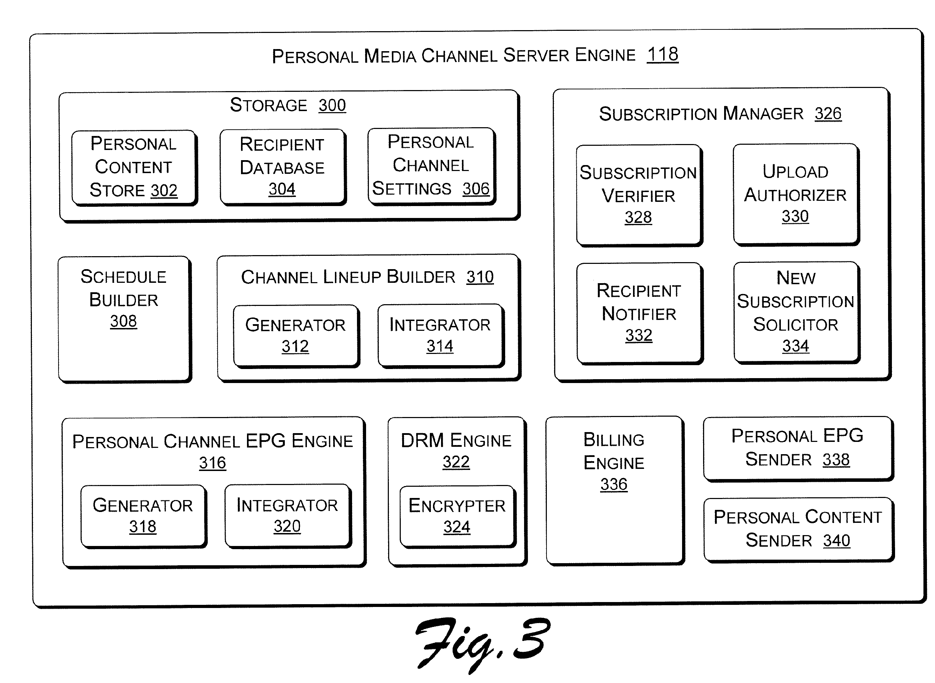

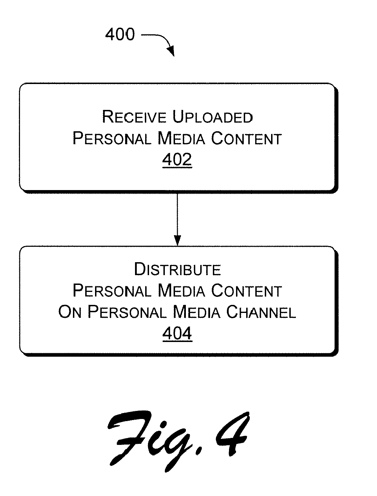

**Fig. 2** shows an exemplary personal media channel client engine 116 that uploads personal media content to a multimedia service 102 and allows a subscriber to select settings for building a personal media channel. An exemplary client engine 116 may be implemented in software, hardware, or combinations of hardware, software, firmware, etc. The specific configuration of the exemplary client engine 116 illustrated in Fig. 2 is only provided as one example, those skilled in the art could devise other possible configurations, using variations in the components.

A media type selector 200 may be included in an exemplary client engine 116 so that a user can select a media type for the personal media channel being designed. The term "media type" as used herein, means the various electronic formats that digital multimedia content are typically stored in or presented through. If the user wishes to present still photos over a personal media channel, then the user can select still pictures (e.g., JPEG) as the media type. A photo slideshow format represents another media type. Videos may be selected as another unique media type, as well as music files, which also represent a unique media type.

A content input 202 allows personal media to be coupled for upload into an exemplary multimedia system 100. In some implementations, the content input 202 may be little more than a port, such as a USB port, for inputting a digital media file. In other implementations, the content input 202 may include removable storage drives, drive controllers, data buffers, etc., for handling the personal media content prior to uploading or during uploading to the multimedia service 102.

In some implementations, if the content input 202 has the capability of accepting analog content, such as a videocassette recording (VCR) on magnetic tape, then the client engine 116 may include an analog-to-digital converter 204. In one variation, personal media content in analog form remains analog from an input stage in a client engine 116 through a broadcast stage over a personal media channel in an analog multimedia service.

An EPG metadata input 206 allows a user to enter custom EPG data for the personal media content to be uploaded. For example, if the personal media content is a homemade video, the user might construct a title and description for the video that can be input through the EPG metadata input 206 and integrated with commercial EPG data from the multimedia service 102 to appear on a same EPG data grid (e.g., channel lineup and schedule information) as the commercial EPG data.

A channel number selector 208 may be included for the user to specify a personal media channel number. In some implementations, the channel number selector 208 is omitted as the server engine 118 generates personal media channel numbers automatically and integrates newly created personal channel numbers with preexisting commercial channel numbers. It should be noted that a server engine 118 may manage and route multiple personal media channels simultaneously, analogous to multiple virtual private networks (VPNs) managed by a network server. In other words, multiple subscribers could each create a personal media channel that might use the same channel number, and this is acceptable if the recipients of these different personal media channels are mutually exclusive. In a multimedia system 100, such simultaneous use of a same channel number is not problematic, because subscribers at distant locations from each other are unlikely to select an overlapping group of proposed recipients. If there is a common recipient, the server engine 118 can assign different channel numbers.

A recipient selector 210 allows the user creating the personal media channel to specify recipients to be offered the personal media channel. In one implementation, the client engine 116 uses a buddy list for selecting potential recipients, similar to instant messaging.

In another implementation, the multimedia system 100 may have a database of recipients and search engine capability for finding recipients. Since subscriber to the multimedia system 100 is a potential recipient, the multimedia system 100 may allow subscribers to remain anonymous to personal media channel offers. Likewise, a client engine 116 may include an incoming content filter 212. Personal media content that possesses potentially objectionable matter may be blocked by the incoming content filter 212. In addition, an incoming content filter 212 may contain a list of allowed subscribers from whom a personal media channel will be accepted, while a personal media channel will not be accepted from those not on the list.

In some implementations, the client engine 116 may include a licensing engine 214. An exemplary licensing engine 214 can work in several different ways. For example, the licensing engine 214 may present a waiver to a user who is creating a personal media channel releasing the multimedia service 102 from potential liability over the user's intellectual property rights in the personal media content to be uploaded. The licensing engine 214 can also solicit an agreement from recipients who assent to receiving a personal media channel. An example agreement may attempt to prevent recipients from reproducing and/or redistributing personal media content from a personal media channel. The licensing engine 214 may also append a copyright warning, etc., to personal media content.

A presentation format selector 216 may be included to allow a user fashioning a personal media channel to select among various channel styles. The channel styles may have functional differences as well as cosmetic differences.

The user may select a more conventional presentation in which one or more personal media programs are spooled by the multimedia service 102 over the personal media channel in a linear fashion according to a schedule. In this channel style, personal media programs are played as live content from the multimedia service 102 according to a schedule set up by the user or by the multimedia service 102. Programs may be repeated at certain intervals according to the schedule. For example, "Family Trip To The Beach" may play every two hours, interspersed with other personal media content. If the user selects a schedule for the personal media content to be spooled, then the presentation format selector 216 may include a spooled content schedule builder 218. In an alternative implementation, the multimedia service 102 synthesizes its own schedule for the uploaded personal media content.

The user may also select a VOD (video-on-demand) storefront channel style. A VOD storefront builder 220 receives user input for determining VOD storefront settings. A recipient of a personal media channel in the VOD style is presented with a user interface that allows the recipient to choose between several possible personal media options at a given time, e.g., by clicking a mouse or a remote control on one of the options. Provision may be included in the VOD storefront channel style for backing out of personal media content being played, to return to a VOD menu of the personal media options.

The presentation format selector 216 may also include a digital rights engine 222. When available in an exemplary multimedia service 102, or in implementations of a server engine 118, the user may chose to send personal media content in multiple quality versions. The quality version that a given recipient qualifies for depends on the digital rights afforded the recipient. In one implementation, the user creating the personal media channel designates the digital rights of recipients according to lists. For example, the user may want only close family members to have access to the highest quality of the personal media content, to keep costs down when the multimedia service 102 charges for storage and distribution of personal media content in proportion to quality or data size. In another implementation, recipients determine their own digital rights by purchasing them from the multimedia service 102. Hence, a recipient subscribing to a "platinum" package might have access to better quality versions of personal media content than recipients subscribing only to a "bronze" package.

Many of the user-selectable options by which a subscriber or other user designs a personal media channel are mediated by a user interface manager 224. That is, an interactive user interface offers personal media channel design options and gathers user selections.

An uploader 226 transfers the input personal media content, the input EPG metadata input, the custom broadcast schedule, and other personal media channel selected settings to an exemplary server engine 118 that typically resides on a server of the multimedia service 102. In one implementation, these data to be uploaded are transferred via an Internet interface 228, e.g., via a web site of the multimedia service 102. However, in some implementations of the subject matter, communication channels other than the Internet 114 may be used to couple subscribers with the multimedia service 102 for uploading.

### Personal Media Channel Server Engine 118

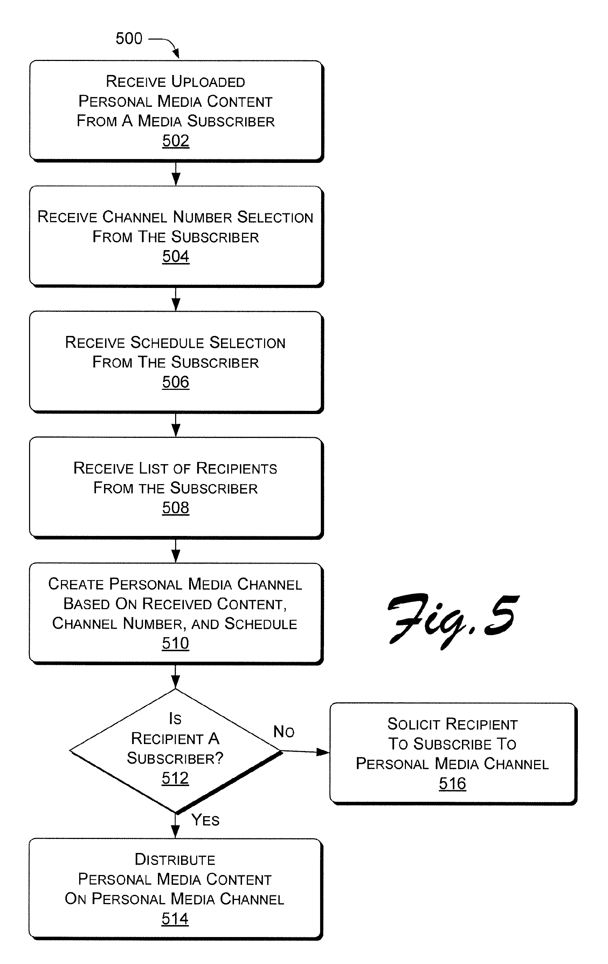

**Fig. 3** shows an exemplary server engine 118 as introduced above that receives personal media content from a client engine 116 and distributes the personal media content to selected eligible recipients. An exemplary server engine 118 may be implemented in software, hardware, or combinations of hardware, software, firmware, etc. The specific configuration of the exemplary server engine 118 illustrated in Fig. 3 is only provided as one example, those skilled in the art could devise other possible configurations, using variations in the components.

A server engine 118 includes access to storage 300, which may further include a content store 302 for the personal media content, a recipient database 304 for storing a list of subscribers eligible to be recipients of a personal media channel, and a settings store 306 for personal media channel settings. Of course, in some implementations, parts of the storage 300 may preexist in the multimedia service 102.

A schedule builder 308 and a channel lineup builder 310 may be included for generating personal media channel listings from schedule and channel lineup data uploaded from the client engine 116. Although the server engine 118 may upload a channel number selection from the initiating user, the channel lineup builder 310 may also include a lineup generator 312 in case the server engine 118 developes a channel lineup that includes multiple personal media channels, e.g., from multiple subscribers, or the user-defined channel number is already in use, etc. The server engine 118 may also include a lineup integrator 314 to keep newly generated personal media channel numbers distinct from preexisting channel numbers of commercial multimedia channels.

A personal channel EPG engine 316 may be included to process EPG data input by the initiating user into an actual format for distribution integrated with commercial EPG data. The personal channel EPG engine 316 may also include a generator 318 to synthesize some of the EPG data associated with personal media content-for example, by adding the initiating subscriber's name and/or other demographic information into a standard EPG format. The integrator 314 in the channel lineup builder 310 seamlessly integrates EPG data for the personal media content into the EPG grid or other EPG format used for preexisting commercial media channels.

A DRM engine 322 may be included either as a standalone component or in concert with the digital rights engine 222 of the client engine 116. An encrypter 324 in the DRM engine 322 may be included to provide different encrypted versions of the personal media content that have different levels of quality, for example, image quality. After authenticating a recipient's digital rights (for example, the recipient's possession of a decryption key via a license), the DRM engine 322 distributes the encrypted version of the personal media content that matches the recipient's digital rights. Alternatively, the DRM engine 322 allows creation of a personal media channel content stream that includes multiple quality layers to be sent to all selected recipients. Then each recipient decrypts a version or layer of the personal media content stream that matches the recipient's digital rights or decryption key(s).

A subscription manager 326 may be included in the server engine 118 to authenticate and authorize senders and receivers of personal media content and to notify senders and receivers that they are authorized to perform an action or that a service is being offered.

Accordingly, a subscription verifier 328 may be included to verify a subscriber before allowing the subscriber to upload personal media content and design a personal media channel. Likewise, the subscription verifier 328 may verify the subscription status of a potential personal media channel recipient.

An upload authorizer 330 notifies a user that an operative subscription is valid and may authorize the UI manager 224 to extend UIs to the user for uploading personal media content and for building the personal media channel.

If the subscription verifier 328 validates the subscription of a potential personal media channel recipient, then a recipient notifier 332 may be included to signal the potential recipient that a personal media channel is available. The notification may take various forms. In one implementation, a signal offering a new personal media channel may appear in the potential recipient's EPG data and/or on the recipient's remote controller for a home entertainment system. In a personal computing environment, the recipient notifier 332 may be an icon, onscreen message, or even an email message notifying of the presence of the new personal channel and offering an acceptance link.

If the subscription verifier 328 determines that a potential recipient is not a subscriber to the multimedia service 102, then a new subscription solicitor 334 may be included to offer a subscription to the potential recipient. The subscription offer may also take various forms, for example, an email to the recipient or a "buy now" button on a television or website screen.

A billing engine 336 may be included to monetize the storage of personal media content by the multimedia service 102 and/or to monetize the distribution of personal media content to each recipient. A user initializing a personal media channel may be billed in proportion to features included in the personal media channel. For example, the user may be charged a fee for using the digital rights engine 222 in designing a personal media channel that distributes a media stream possessing different quality layers.

The server engine 118 also includes a personal channel EPG sender 338 and a personal content sender 340. These components transfer the personal media content and the personal channel EPG data to recipients in such a manner that the personal media content and the personal channel EPG are integrated with the regular commercial media content and EGP data for delivery. In other words, a personal media channel is integrated into the preexisting data transfer mechanisms of a multimedia system 100 and is thus streamlined into existing systems so that the functionality and appearances of personal media channels are similar to those of preexisting commercial channels and EPG formats.

### Exemplary Methods

**Fig. 4** shows an exemplary method 400 of receiving and distributing personal media content. In the flow diagram, the operations are summarized in individual blocks. The exemplary method 400 may be performed by hardware, software, or combinations of both, for example, by an exemplary personal media channel server engine 118 and/or a personal media channel client engine 116.

At block 402, personal media content that has been uploaded from a user of a multimedia service 102 is received. The personal media content may be digital or even analog photos, videos, audio, a slideshow, etc. A client engine 116 may input the personal media content as well as extend a UI by which the user designates characteristics of a personal media channel for distributing the personal media content. For example, a user may select a channel number for the personal media channel, as well as a broadcast schedule. The user may also input custom and/or homemade EPG data. In some implementations, the user may specify a channel format for the personal media channel, for example, a personal media channel that spools content according to a user-designed schedule or a personal media channel that presents personal media content in a VOD storefront. The user may also select a group of proposed recipients for the personal media channel. In one implementation, not only does the list of selected recipients exclude outsiders from receiving the personal media channel, but the recipients themselves can select their degree of openness to personal media channel offers of various sorts.

When the uploaded personal media content is received, a personal media content server engine 118 may store the personal media content, the personal media channel settings, and a database of proposed recipients 304. Other components of a server engine 118 finalize the personal media channel listing, i.e., integrate the personal media channel number and EPG schedule information into a preexisting channel lineup and EPG format for the multimedia service 102.

At block 404, the personal media content is distributed over the personal media channel. The server engine 118 may check the subscription status of potential recipients to make sure they are current with the multimedia service 102. If a selected recipient does not subscribe to the multimedia service 102, a server engine 118 may offer a subscription to the potential recipient.

The distributing of the personal media content may also include billing the sender for each recipient and/or billing the sender for storing the personal media content for distribution. A billing engine 336 may perform the billing, and also bill recipients for licenses to decrypt various quality layers of the personal media content. In other words, a potential recipient may be offered the option of receiving a high resolution and/or high fidelity version of the personal media content at a price.

In one implementation, if a given potential recipient has been selected by the sender, possesses a current subscription to the multimedia service 102, and agrees to receive the personal media content, then the personal media content and its associated personal channel EPG data is sent to the recipient via the personal media channel associated with the sender.

**Fig. 5** shows another exemplary method 500 of creating a personal media channel. In the flow diagram, the operations are summarized in individual blocks. The exemplary method 500 may be performed by hardware, software, or combinations of both, for example, by an exemplary personal media channel server engine 118 and/or a personal media channel client engine 116.

At block 502, uploaded personal media content from a subscriber is received by a multimedia service 102. A client engine 116 associated with a set top box 104 or a personal computing device 110 may upload the personal media content and in some implementations, may upload associated personal media channel settings.

At block 504, a channel number selection is received from the subscriber. In one implementation, the subscriber also specifies other characteristics of the personal media channel. For example, the subscriber can select the type of media to be presented on the personal media channel. The subscriber can also select the EPG data to describe and/or accompany the personal media content.

At block 506, a broadcast schedule for the personal media content is received from the subscriber. A schedule builder 218 component of a client engine 116 can extend user interfaces for allowing the subscriber to designate programs and their broadcast times or availability on the personal media channel. If the subscriber selects a VOD storefront presentation for the personal media channel, then the schedule builder 218 may determine expiration times, after which a given personal media content will no longer be available on the personal media channel.

At block 508, a list of recipients for the personal media content is received from the subscriber. The list of recipients may be constructed by a recipient selector 210 and associated UIs of the client engine 116. A server engine 118 may upload the list of recipients and then determine which recipients will actually receive the personal media channel. Recipients who are not subscribers to the multimedia service may be disqualified, but offered a subscription. Recipients who are not licensed or do not possess the requisite digital rights for a certain quality of content specified or supplied by the sending subscriber may also be disqualified from receiving the personal media channel. Recipients themselves can also refuse or filter personal media channels that are offered.

At block 510, a personal media channel for distributing the personal media content is created from the received content, channel number, and schedule, etc. In some implementations, a server engine 118 may construct the personal media channel mainly according to a predetermined format, while in other implementations the characteristics of the personal media channel are mainly uploaded as settings selected by the sending subscriber. An exemplary server engine 118 is typically integrates the personal media channel with other channels supplied by the multimedia service 102 and integrates personal channel EPG data with the other EPG data promulgated by the multimedia service 102.

At block 512, the exemplary method 500 queries whether a selected recipient is a subscriber. If the selected recipient is a subscriber, then the exemplary method 500 branches to block 514, but if the selected recipient is not a subscriber, then the exemplary method 500 branches to block 516.

At block 514, the personal media content is distributed to the recipient over the personal media channel. In one implementation, the personal media channel can be supplied to a recipient by the same transmission techniques as other channels of the multimedia service 102 are sent. Likewise, the personal channel EPG data is integrated into the EPG transmission format for sending EPG data of other channels of the multimedia service 102. That is, in one implementation, a personal media channel is not tacked onto regular multimedia programming in side-band or out-of-band fashion, but the personal media channel becomes just another channel with respect to usual transmission mechanisms for media content and EPG data.

At block 516, if a proposed recipient does not subscribe to the multimedia service 102 supplying the personal media channel, then the potential recipient may be solicited for a subscription. Depending on what the potential recipient does subscribe to, the solicitation for a subscription may take the form of an EPG alarm, an instant message, an email, etc.

### Conclusion

The foregoing discussion describes exemplary personal media channels. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A method, comprising:
receiving uploaded personal media content from a subscriber of a television multimedia service;
in response to receiving the uploaded personal media content, creating a personal media television channel associated with the subscriber, wherein the personal media television channel comprises a channel of the television multimedia service and provides the personal media content; and
offering the personal media television channel exclusively to recipients selected by the subscriber.

2. The method as recited in claim 1, wherein the offering includes integrating the personal media television channel with a television channel lineup of one of the recipients.

3. The method as recited in claim 1, wherein the personal media content is selected from a group of personal media contents, including personal photos, personal videos, personal slideshows, and personal audio files.

4. The method as recited in claim 1, further comprising converting analog personal media content to digital personal media content and uploading the digital personal media content.

5. The method as recited in claim 1, further comprising receiving uploaded personal media channel settings and creating the personal media channel according to the settings.

6. The method as recited in claim 5, wherein the settings include one of a media type, a channel number, a presentation format, a schedule for spooling the personal media content, and a parameter for a video-on-demand storefront user interface.

7. The method as recited in claim 1, further comprising receiving EPG electronic program guide information associated with the personal media content from the subscriber.

8. The method as recited in claim 7, wherein the EPG information includes a title describing the personal media content or a description of the personal media content.

9. The method as recited in claim 1, further comprising:
receiving from the subscriber a list of recipients eligible to receive the personal media television channel; and
offering the personal media television channel only to the recipients on the list.

10. The method as recited in claim 9, further comprising checking a subscription status of the recipients to the television multimedia service and offering a subscription for receiving the personal media television channel to non-subscribing recipients.

11. The method as recited in claim 1, further comprising charging the subscriber a fee for storing the uploaded personal media content.

12. The method as recited in claim 1, further comprising charging the subscriber a fee for each recipient of the personal media television channel.

13. The method as recited in claim 1, further comprising notifying a recipient that a personal media television channel associated with the subscriber is available to the recipient.

14. The method as recited in claim 1, further comprising encrypting the personal media content into quality layers, wherein decryption of a quality layer depends on a digital right possessed by the recipient.

15. The method as recited in claim 1, further comprising presenting a license agreement to a recipient of the personal media content prior to distributing the personal media content to the recipient.

16. The method as recited in claim 1, further comprising integrating the personal media television channel with an existing channel map of the television multimedia service.

17. The method as recited in claim 1, wherein the distributing comprises offering the personal media content to a recipient via a video-on-demand storefront user interface format.

18. The method as recited in claim 1, wherein the distributing comprises offering the personal media content to a recipient as spooled content according to a schedule designed by the subscriber.

19. The method as recited in claim 1, further comprising authorizing the uploading based on a subscription status of the subscriber.

20. An engine, comprising:
a type selector to specify a media type for distribution of personal media content on a personal media television channel of a television multimedia service;
a content input for receiving personal media content of the media type; and
a recipient selector for proposing recipients to receive the personal media television channel through the television multimedia service.

21. The engine as recited in claim 20, further comprising an EPG electronic program guide input for specifying EPG data associated with the personal media content.

22. The engine as recited in claim 20, further comprising a presentation format selector to designate a channel format for the personal media television channel, wherein a spooled content format sends the personal media content according to a schedule and a video-on-demand format offers a recipient a user interface for selecting between personal media contents viewable at a given time.

23. The engine as recited in claim 20, further comprising a digital rights engine to specify multiple quality layers of personal media content for the personal media television channel.

24. The engine as recited in claim 20, further comprising a licensing engine to administer intellectual property rights of personal media content to be distributed over the personal media television channel.

25. The engine as recited in claim 20, further comprising an analog-to-digital converter to change an analog personal media content to a digital format.

26. The engine as recited in claim 20, wherein the personal media content includes one of a personal photo, a personal video, a personal audio file, or a personal photo slideshow.

27. An engine, comprising:
data storage for storing personal media content uploaded from a subscriber of a television multimedia service for distribution on a personal media television channel of the television multimedia service;
a channel lineup builder to integrate a personal media television channel for the uploaded personal media content with other channels of the television multimedia service;
an EPG electronic program guide engine to integrate EPG data of the personal media television channel with other EPG data for other channels of the television multimedia service.

28. The engine as recited in claim 27, further comprising a schedule builder to integrate a programming schedule of the personal media television channel with schedule information of other channels of the television multimedia service.

29. The engine as recited in claim 27, further comprising a subscription manager to verify subscription statuses of the initiating subscriber of a personal media television channel and potential recipients of the personal media television channel.

30. The engine as recited in claim 27, further comprising a recipient notifier to signal a potential recipient of the personal media television channel that the personal media television channel is available.

31. The engine as recited in claim 27, further comprising a digital rights management engine to send the personal media content over the personal media television channel in encrypted quality layers to be decrypted by recipients according to digital rights of the recipients.

32. The engine as recited in claim 27, further comprising a subscription solicitor to solicit a subscription to the television multimedia service for a non-subscribing potential recipient of the personal media television channel.

33. The engine as recited in claim 27, further comprising a billing engine to monetize storage of personal media content by the television multimedia service and monetize distribution of the personal media content to recipients.

34. A system, comprising:
means for receiving uploaded personal media content from a subscriber of a television multimedia service; and
means for distributing the personal media content over a personal media television channel of the television multimedia service.

35. The system as recited in claim 34, further comprising means for creating the personal media television channel according to specifications selected by the subscriber.

36. A readable medium including instructions capable of being read by a computing device to execute actions, including:
receiving personal content from a user of a television multimedia service, wherein the media type of the personal content is user-selectable;
creating a custom television channel associated with the user, wherein the custom television channel distributes the personal content via the television multimedia service to recipients selected by the user; and
offering the custom television channel exclusively to the recipients selected by the user.

37. The readable medium as recited in claim 36, further comprising instructions to create the custom television channel according to specifications selected by the user.

38. The readable medium as recited in claim 36, wherein the custom television channel further comprises user-customizable EPG information to be distributed to the recipients.

39. The readable medium as recited in claim 36, further comprising instructions to charge fees to the user for storing the personal content in the television multimedia service and for distributing the personal content to the recipients.

40. The readable medium as recited in claim 36, further comprising instructions to offer a subscription to non-subscribing recipients for receiving personal television channels of the television multimedia service.
